# EUROPEAN PATENT APPLICATION

(11) **EP 4 819 065 A1**
(43) Date of publication of application: **07.10.2026**
(21) Application number: 25167867.8
(22) Date of filing: 01.04.2025
(51) Int. Cl.: G06V 10/764, G06V 10/77, G10L 25/63, G10L 15/26, H04N 7/14

(54) **COMPUTER IMPLEMENTED METHODS FOR COMMUNICATION ANALYSIS AND DISENGAGEMENT DETECTION IN REAL TIME**

(71) Applicant: Curcillo, Dario, Oxfordshire RG9 4QN (GB); Sayers, Lisa, Oxfordshire RG9 4QN (GB)
(72) Inventor: Curcillo, Dario, Oxfordshire RG9 4QN (GB); Sayers, Lisa, Oxfordshire RG9 4QN (GB)
(74) Representative: Mathys & Squire

(57) **Abstract**

A computer implemented method for analysis of a video-telecommunication call is provided. In particular, the method comprises obtaining a video stream of a first participant in a video-telecommunication call, and generating embeddings based on facial expression data and pose and/or gesture and/or other body language data extracted from the video stream. The method also comprises obtaining a contemporaneous audio stream of the first participant in the video- telecommunication call, and generating embeddings based on voice characteristic data extracted from the first audio stream, and text data extracted from the first audio stream via speech to text transcription. The method dynamically assigns a weighting to each of the embeddings using a cross-modal attention mechanism, generates a combined embedding based the respective dynamic weightings, and assigns an emotion metric to the first participant based on the combined embedding. A signal is then output to a second participant in the video-telecommunication call, wherein the signal is based on the emotion metric assigned to the first participant.

## Description

### Field of the invention

The present disclosure relates to computer implemented methods for analysing verbal and non-verbal human communication and detecting conversational disengagement, for example during a video-telecommunication call.

### Background

Verbal communication is only one aspect of human communication. In fact, Mehrabian's 7-38-55 Communication Model concluded that paralingual, facial expressions, and body language alone communicated 93% of people's feelings and attitudes (i.e., 55% for facial and body language and 38% for paralingual, respectively), whilst only 7% of feelings and attitudes are conveyed through words used in spoken communications.

This may at least partially explain the rapid adoption of video-telecommunication, which typically includes both video and audio streams and is often favoured over conventional audio-only communication methods.

Visible and audible cues, such as facial expressions, hand gestures, body language, and speech, are fundamental components of human communication. Facial expressions, gestures, and pose or body language based on the physical movements or positions of muscles, can be formed consciously and unconsciously, and can convey fundamental information. Similarly, voice characteristics, including timbre, stress, intonation, vocal register, vocal resonance, pitch, loudness, speech rate, and language content, also convey critical information relating to human interactions.

Existing methods of documenting and analysing human interactions often rely on transcriptions of the verbal communication only. It follows that existing speech to text transcription tools capture only a fraction of human communication (as little as 7% according to Mehrabian's Model). This often results in the wider communication context being lost, which can cause misinterpretation or misunderstandings.

Furthermore, some conditions may make it difficult for individuals to register non-verbal cues, for example due to total or partial blindness, autism, or other conditions. Again, this can result in miscommunications and misunderstandings.

There is therefore a need to improve methods of capturing, analysing, and documenting human communication, including through the interaction of verbal and non-verbal cues simultaneously.

### Summary of the invention

Aspects of the invention are as set out in the independent claims and optional features are set out in the dependent claims. Aspects of the invention may be provided in conjunction with each other and features of one aspect may be applied to other aspects.

In a first aspect of the invention, there is provided a computer implemented method for providing analysis of a human interaction, the method comprises obtaining a video stream of a first participant in a human interaction or conversation, and an audio stream, contemporaneous to the video stream, of the first participant.

The method further comprises generating a first embedding, using a first embedding model, based on facial expression data extracted from the video stream, and generating a second embedding, using a second embedding model, based on pose and/or gesture and/or other body language data extracted from the video stream.

Furthermore, the method comprises generating a third embedding, using a third embedding model, based on voice characteristic data extracted from the first audio stream, and generating a fourth embedding, using a fourth embedding model, based on text data extracted from the first audio stream via speech to text transcription.

The method then further comprises dynamically assigning a weighting to each of the first to fourth embeddings, using a cross-modal attention mechanism, and generating a combined embedding, based on each of the first to fourth embeddings and the respective dynamic weightings. Based on the combined embedding, the method then comprises assigning an emotion metric to the first participant.

A signal is then output to a second participant, wherein the signal is based on the emotion metric assigned to the first participant.

This may be advantageous to provide a signal to the second participant, based on a more complete comprehension of the communication from the first participant, including both verbal and non-verbal cues.

The emotion metrics can include an emotional type, a number of occurrences of the emotional type, the intensity of the emotional type, and so on. The emotion metric can be based on a threshold value, on a target value, on a goal, etc. The emotion metric can be based on emotional types that can occur over a period of time. More than one emotion metric can be provided.

In some examples, the method may be used for analysis of a video-telecommunication call, wherein the video and audio streams of the first participant are obtained from the video-telecommunication call. However, the skilled person will understand that the method may also be applied to other human interactions, including in-person interactions for which a video and audio stream is obtained including the first participant. Additionally, or alternatively, the method may be used for analysis in an augmented reality environment, for example wherein a video and audio stream is obtained including the first participant. This could include, for example, use with smart glasses.

For example, facial expression data extracted from the video stream may include detection of microexpressions (subtle emotional cues) and macroscopic facial gestures.

This may also include, but is not limited to identifying gaze direction and/or blink rate.

Pose and/or gesture data extracted from the video stream may include detecting fidgeting, posture changes, including head tilts, hand movement, and/or other body language data.

The embeddings may be used to identify behaviours and determine emotion metrics, such as confidence, nervousness, and engagement.

Voice characteristic data may include volume, tone and/or pitch modulation, and/or rhythm variations, including hesitations, pauses, and/or pace of speech.

The output signal may comprise the emotion metric assigned to the first participant.

In some examples, the emotion metric may be an engagement and/or disengagement metric. For example, the disengagement metric may represent a risk score that the first individual has disengaged from the interaction or conversation.

The assigned emotion metric may be updated during the video-telecommunication call based on the obtained real-time video and audio streams.

In some examples, outputting the signal may comprise outputting or updating a transcript of the video-telecommunication call, wherein the output or updated transcript comprises the emotion metric assigned to the first participant.

Speech to text transcription tools are known and often used for automated transcription of recorded speech from audio streams. However, such transcriptions currently only reflect literal verbal communication. By this approach, it follows that existing speech to text transcription tools capture only a fraction of human communication. As such, by outputting or updating a transcript to include one or more emotion metrics or emotional classifications based on said metrics, it allows the overall context of the communication to be captured, including capturing non-verbal cues. This can be essential to capturing the overall meaning of the communication, for example to capture when a speaker may be speaking sarcastically, with uncertainty, or otherwise.

The method may further comprise predicting an outcome of the video-telecommunication call using a predictive model, based on the combined embedding and the assigned emotion metric, and outputting the signal to the second participant is based on the predicted outcome. For example, predicting the outcome of the video-telecommunication call using the predictive model may based on historical behavioral patterns and the assigned emotion metric to predict the behaviour outcome of the first participant.

In some examples, the method further comprises obtaining a second video stream of the second participant in the video-telecommunication call, and obtaining a second audio stream of the second participant in the video- telecommunication call, contemporaneous to the first and second video streams.

The method may then further comprise generating a fifth embedding, using the first embedding model, based on facial expression data extracted from the second video stream; generating a sixth embedding, using the second embedding model, based on pose and/or gesture and/or other body language data extracted from the second video stream; generating a seventh embedding, using the third embedding model, based on voice characteristic data extracted from the second audio stream; and generating an eighth embedding, using the fourth embedding model, based on text data extracted from the second audio stream via speech to text transcription. Thus, the method may create embeddings to capture the full interaction, including verbal and non-verbal cues, for each of the first participant and the second participant.

The method may then dynamically assign a weighting to each of the fifth to eighth embeddings, using a cross-modal attention mechanism.

A second combined embedding may then be generated, based on each of the fifth to eighth embeddings and the respective dynamic weightings. The method may then assign an emotion metric to the second participant based on the second combined embedding, wherein outputting the signal to the second participant is further based on the emotion metric assigned to the second participant.

Alternatively, or in addition, the first combined embedding may additionally be based on each of the fifth to eighth embeddings. This may be advantageous to provide an embedding that represents the overall context of the communication by combining the analysis of audio and video streams for both / all participants in the communication.

Outputting the signal may comprise outputting a recommended behaviour to the second participant, based on the emotion metric assigned to the first participant. For example, the recommended behaviour may be selected based on historical behaviour pattern analysis. Predictive modelling may be applied to forecast the outcome of the interaction based on historical behavioural patterns and current emotion metrics. By way of non-limiting example, if the emotion metric assigned to the first participant indicates that they are nervous, or have low confidence, the method may output a recommendation to the second participant to speak in a slower, lower tone of voice and/or to smile more. Based on historical behaviour patterns, the method outputs these recommendations by predicting behaviours that will have a positive influence on the communication, for example leading to increased confidence of the first participant or reduced nervousness. This may be determined based on optimising for a predetermined goal or objective defined by one or more emotion metrics. The output recommended behaviour or behavioural adjustments may include, but are not limited to, speech adjustment, gesture adaptation, tone modulation, and/or questioning strategy or verbal content modification. In addition, the method may dynamically adjust its output behavioural adjustments or recommendation outputs based on real-time feedback from the video and audio streams. For example, if a behavioural adjustment is unsuccessful, the method may output an alternative recommendation.

The method may further comprise generating, in real time, an aggregate probability of disengagement of the first participant based on the combined embedding for said first participant and sending a signal to generate an alert in the event that the aggregate probability of disengagement exceeds a threshold. The aggregate probability of disengagement may be provided as the assigned emotion metric, or separately thereto. However, the skilled person will understand that other aggregate emotion metrics may also be generated.

In another aspect of the invention, there is provided a computer-implemented method for machine-trained analysis of video-telecommunication calls. The method comprises capturing, into a computing device, contemporaneous audio information and video information from or of a plurality of participants in video-telecommunication calls; and for each participant, extracting facial expression data, and pose and/or gesture and/or other body language data from the video information, extracting voice characteristic data from the audio information, and extracting text data from the respective audio information via speech to text transcription.

The method then comprises learning, on a cross-modal attention model, trained weights using the facial expression data, pose and/or gesture and/or other body language data, voice characteristic data, and text data extracted from the contemporaneous audio information and video information, wherein the trained weights are trained for each of the facial expression data, pose and/or gesture and/or other body language data, voice characteristic data, and text data and are trained simultaneously, and wherein the learning facilitates emotional analysis based on verbal and non-verbal communication cues from the audio information and the video information for a participant in the video-telecommunication call. The method then comprises learning descriptors, as part of the cross-modal attention model, for emotional content.

Subsequently, the method comprises obtaining further contemporaneous audio information and video information of at least one participant in a video-telecommunication call, and analysing the further information using the trained weights to provide an emotion metric for said participant based on the further information.

In some examples, the method may further comprise capturing, into a computing device, contemporaneous audio information and video information of at least a first participant in a video-telecommunication call and a second participant in the same video-telecommunication call; and for each participant, extracting facial expression data, pose and/or gesture and/or other body language data, voice characteristic data, and text data extracted from the respective audio information via speech to text transcription; learning, on a cross-modal attention model, trained weights using the facial expression data, pose and/or gesture and/or other body language data, voice characteristic data, and text data extracted from the contemporaneous audio information and video information for the first and second participants contemporaneously, wherein the learning facilitates analysis of communication between the first and second participants in the video-telecommunication call. This may advantageously allow the trained weights to reflect the communication, including verbal and non-verbal cues, between the first and second participants. The method may then further comprise learning descriptors, as part of the cross-modal attention model, for aggregate emotion metrics to reflect overall communicative content. Example descriptors may include, but are not limited to, the likes of: engaged, disengaged, withdrawn, positive, negative, agreeable, disagreeable.

The method may then capture or obtain, into a second computing device, further contemporaneous audio information and video information of at least a first and second participant in a video-telecommunication call, and the method further comprises analysing the further information using the trained weights to provide a descriptor of the communicative content for the video-telecommunication call based on the further information.

In some examples, the method further comprises learning descriptors for facial expression data, pose and/or gesture and/or other body language data, voice characteristic data, and/or text data. Based on the descriptor of the communicative content or emotional content, the method may output at least one descriptor relating facial expression data, pose and/or gesture and/or other body language data, voice characteristic data, and text data, wherein the output descriptor is correlated with a different communicative content descriptor to the communicative content descriptor provided by the analysis such that presence of the facial expression data, pose and/or gesture and/or other body language data, voice characteristic data, and text data associated with said output descriptor in further contemporaneous audio information and video information of at least a first and second participant in a video-telecommunication call is predicted to change the communicative content descriptor for the video-telecommunication call. For example, the method may analyse video and content of a first participant and, based on the learned weightings, output that the first participant is disengaged from the communication. The method may then output a signal comprising a recommended descriptor to the second user, for example recommending a change in tone, or cadence, or to ask an open question, wherein the recommendation is predicted to shift the communication analysis, for example to reengage the first participant.

In another aspect of the invention, there is provided a computer-implemented method for detecting conversational disengagement in a video-telecommunication call. The method comprises obtaining a first video stream of a first participant in a video-telecommunication call; capturing facial expression data and pose and/or gesture and/or other body language data extracted from the first video stream; obtaining a first audio stream of the first participant in the video- telecommunication call, contemporaneous to the first video stream; capturing voice characteristic data extracted from the first audio stream; and capturing text data extracted from the first audio stream via speech to text transcription. The method then comprises dynamically assigning a weighting to each of the captured facial expression data, pose and/or gesture and/or other body language data, voice characteristic data, and text data using a cross-modal attention mechanism, and determining an aggregate engagement metric for the first participant based on each of the captured facial expression data, pose and/or gesture and/or other body language data, voice characteristic data, and text data and the respective dynamic weightings. In the event that the aggregate engagement metric breaches a pre-determined threshold, the method comprises sending an alert a second participant in the video-telecommunication call. This may be advantageous to detect disengagement of a user. This may be particularly useful for detection in video telecommunication calls as it can be difficult to detect whether a user is engaged or not, often more so than for in-person communications. For example, in some instances, a participant may be distracted or disengaged from the communication in the video call by instead focusing on content, such as replying to emails or the like. Whilst this is likely to be easier to discern in-person, this can be difficult for another participant in the video call to detect as they are unable to see what content said participant is viewing or engaging with. The present method therefore aims to determining an aggregate engagement metric for the first participant based on each of the captured facial expression data, pose and/or gesture and/or other body language data, voice characteristic data, and text data and the respective dynamic weightings.

In the event that the aggregate engagement metric breaches a pre-determined threshold, for example to indicate a high probability of participant disengagement, the method may comprise sending an alert the second participant including outputting a recommended counterstrategy to re-engage the participant.

In some examples, the method may further comprise sending an alert to the first participant in the video-telecommunication call in the event that the aggregate engagement metric breaches a pre-determined threshold. The alert to the first participant may cause an alert to be displayed on a remote device of the first participant. Optionally, the alert may request input from the user, for example in an attempt to engage the user, for example asking the user to acknowledge the alert.

In another aspect of the invention, a computer program product is provided comprising instructions configured to program a programmable processor to perform the method of any of the preceding aspects of the invention.

### Drawings

Embodiments of the disclosure will now be described, by way of example only, with reference to the accompanying drawings, in which:
Figs. 1A and 1B show block diagrams of two example systems for performing methods of the present invention.
Fig. 2 illustrates a flow diagram of an example method of the present invention.
Fig. 3 shows a block diagram illustrating an example process for feature extraction, and fusion of multimodal data into a single contextual representation.
Fig. 4 shows a block diagram illustrating an example process for engagement classification. The skilled person will understand that this may also apply to other emotional classification, based on other emotion metrics.
Fig. 5 shows a block diagram illustrating an example process for behaviour prediction, wherein the process analyses past interactions, user-specific behaviours, and longitudinal engagement trends to update real-time signal output accordingly.
Fig. 6 illustrates a flow diagram of another example method of the present invention, relating to machine-trained analysis.

### Specific description

Embodiments of the claims relate to computer implemented methods for analysis of a conversation, for example via a video-telecommunication call, and detecting conversational disengagement.

It will be appreciated from the discussion above that the embodiments shown in the Figures are merely exemplary, and include features which may be generalised, removed or replaced as described herein and as set out in the claims.

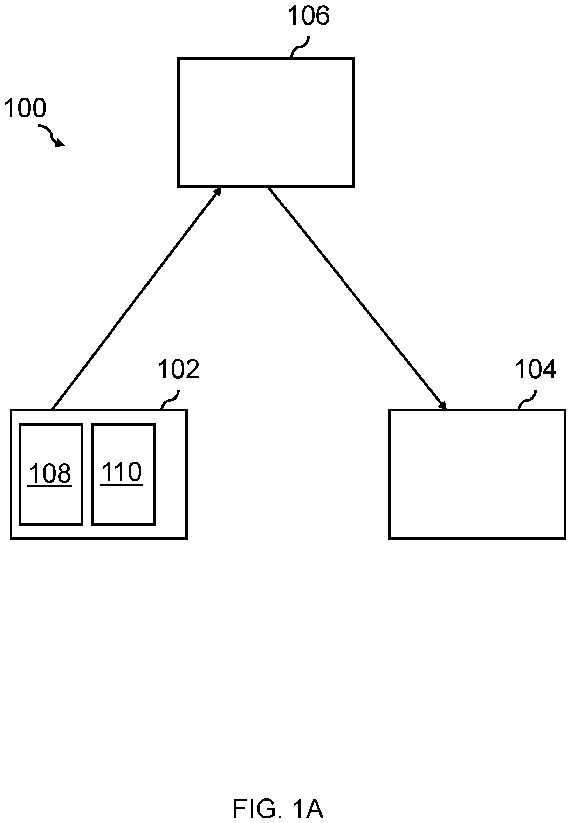

Fig. 1A illustrates a block diagram of an example system for performing methods of the present invention. The system 100 comprises a first remote device 102, a second remote device 104, and a remote server or cloud server 106.

The first remote device 102 comprises a video capture device 108, such as a camera, and an audio capture device 110. The first remote device 102 is configured to capture contemporaneous audio and video data of a first participant. Optionally, the streams of video data and audio data may be captured by way of a video telecommunication call between the first remote device 102 and the second remote device 104. In some examples, the first remote device may be a user equipment device, such as a smartphone, laptop, or tablet, however the skilled person will understand that this is not limiting.

The first remote device 102 is configured to send a stream of video data and a stream of contemporaneous audio data to the remote server 106.

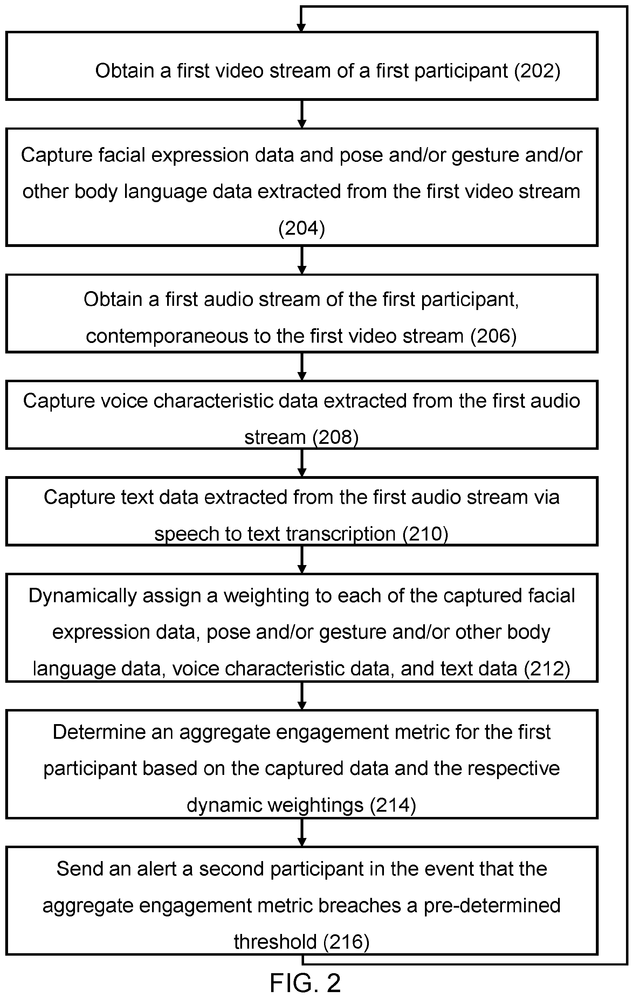

The remote server 106 comprises a processing unit configured to process the stream of video data and audio data received from the first device. For example, the processing unit may be configured to perform the method as shown in Fig. 2.

Based on the processing performed by the processing unit, the remote server 106 is also configured to communicate with the second remote device 104. The second remote device 104 may be a user equipment device associated with a second participant.

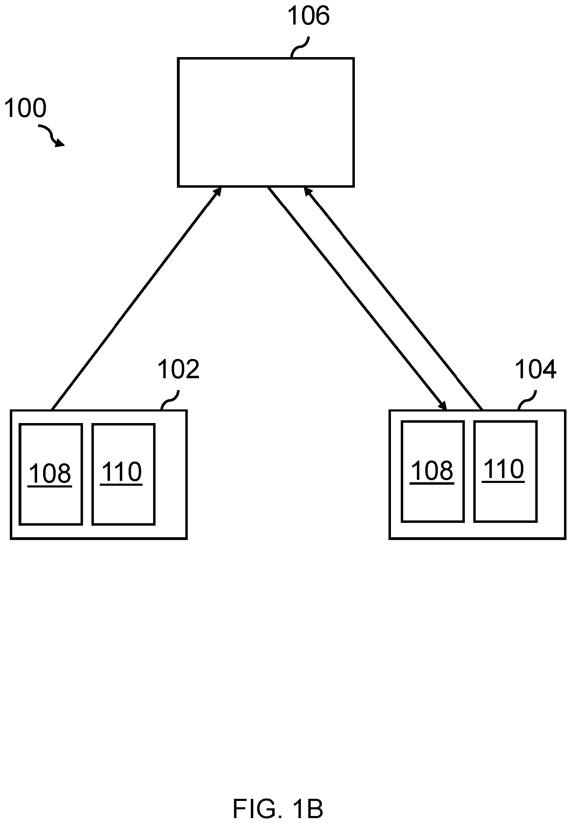

In the example shown in Fig. 1B, the second remote device 104 also comprises a video capture device 108, such as a camera, and an audio capture device 110. The second remote device 104 is configured to capture contemporaneous audio and video data of the second participant. Optionally, the streams of video data and audio data may be captured by way of a video telecommunication call between the first remote device 102 and the second remote device 104.

The second remote device 102 may therefore also be configured to send a stream of video data and a stream of contemporaneous audio data to the remote server 106.

The processing unit of the remote server 106 may therefore be configured to process the stream of video data and audio data received from the second remote device 104, in addition to that received from the first remote device 102.

Fig. 2 shows an example flow diagram of a present method of the invention, for example wherein the method is configured to be performed by the remote server 106 of the system of Fig. 1A or 1B.

A video data stream is obtained by a processor, such as the processing unit of the remote service 106, for a first participant in a communication interaction (202), for example wherein the video stream is obtained based on a video telecommunication call.

The video data stream is passed through a facial expression module which extracts facial data (302) such as micro expressions and gaze direction of the first participant (204). The micro expressions may include capturing eyebrow and/or mouth movements. For example, the first facial expression module may utilise a convolutional neural network (CNN) -based deep learning model.

Following feature extraction, the method comprises generating vectorised embeddings. For example, a facial embedding may be generated, encoding for example gaze direction, eye movement, and microexpressions.

The video data stream is also passed through body language and gesture detection module. This module extracts pose data and/or other body language data (304) which may include tracking hand movements, posture, and head tilts. The body language and gesture detection module may also be configured to detect a rate of change of pose, for example as a measure of fidgeting or restlessness. For example, the body language and gesture detection module may comprise pose estimation frameworks.

As above, following feature extraction, a pose embedding is also generated, for example to capture pose and optionally rate of change of pose (e.g. fidgeting).

The processor also obtains an audio stream of the first participant, wherein the audio stream is contemporaneous to the first video stream (206)

The audio data stream is processed by a voice analysis module. The voice analysis module is configured to extract voice characteristic data (306) (208), for example, pitch, intonation, stress, volume, pause and hesitations, and speech cadence. The voice analysis module may comprise, for example, Mel-frequency cepstral coefficients (MFCC)-based model for acoustic feature extraction and deep audio processing.

A voice embedding is subsequently generated based on the extracted voice data features.

The audio data stream is also processed by a speech to text transcription module to obtain text data (308) representing a transcript of the first participant speech (210). The text data is then processed by a natural language processing model to analyse the sentiment of the speech of the first participant. This may include generating a speech embedding for the text data.

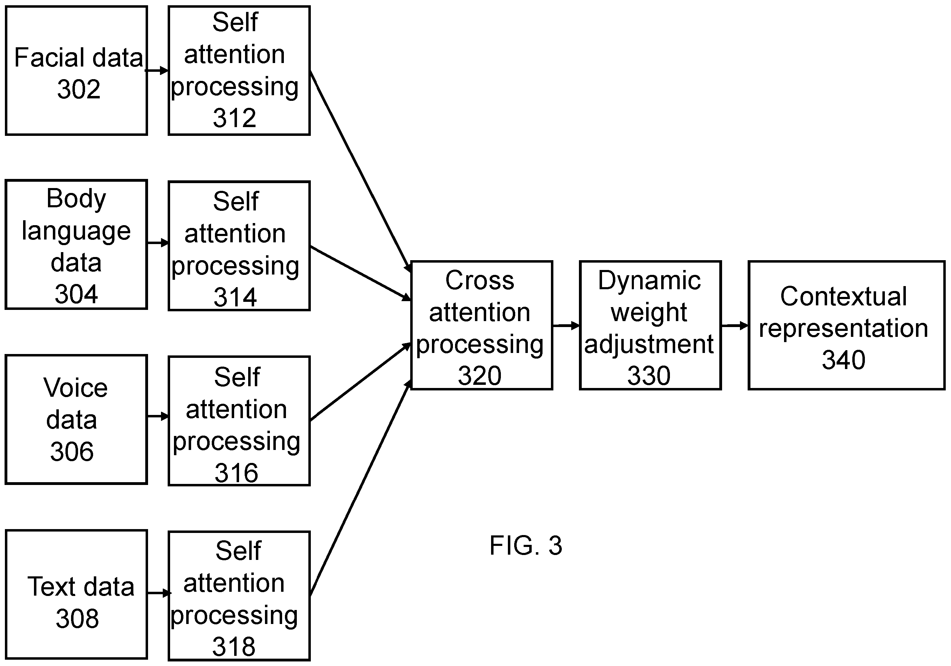

The extracted embeddings (facial, pose and other body language, voice, and speech) are then passed through a transformer-based attention model, as illustrated by Fig. 3A.

Self-attention (312, 314, 316, 318) and cross-modal attention (320) mechanisms are applied to determine the most critical engagement factors in real-time. This is then used to adjust and assign contextual weightings to each data set dynamically (212) (330). For example, if the first participant has a positive or neutral expression (detected by facial data) but also has a hesitant voice (detected by voice data), the voice sentiment is weighted higher than facial cues.

A final fused representation of the first participant's communication interaction is then generated (340), preferably by way of a vector. This advantageously captures verbal and non-verbal aspects of the communication.

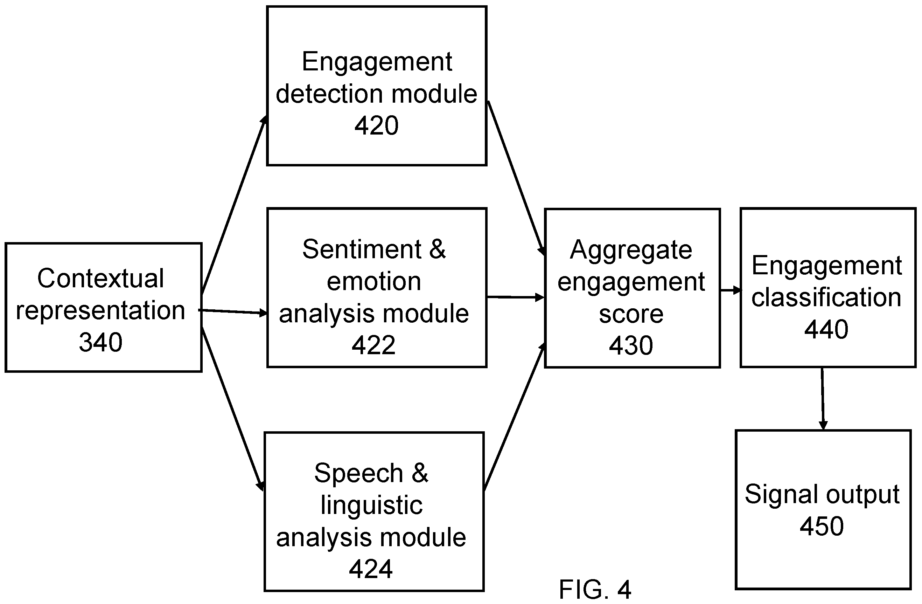

Based on learned weightings, an aggregate engagement metric (430) is then determined for the first participant based on the captured data and the respective dynamic weightings (214). This is illustrated by Fig. 4. The aggregate engagement metric may then be output to a user, for example wherein the aggregate engagement metric for the first participant is output to a remote device of the second participant for display to the second participant.

The aggregate engagement metric (430) may then be used to classify the engagement of the first participant. For example, in the event that the aggregate engagement metric breaches a pre-determined threshold, the participant may be classified as "disengaged" and the remote server (106) sends an alert (450) to the second remote device (104) (216) to alert the second participant. This may be advantageous to alert the second participant in the communication to a determination that the first participant has disengaged from the interaction. In response to the alert, the second participant may then implement one or more re-engagement strategies.

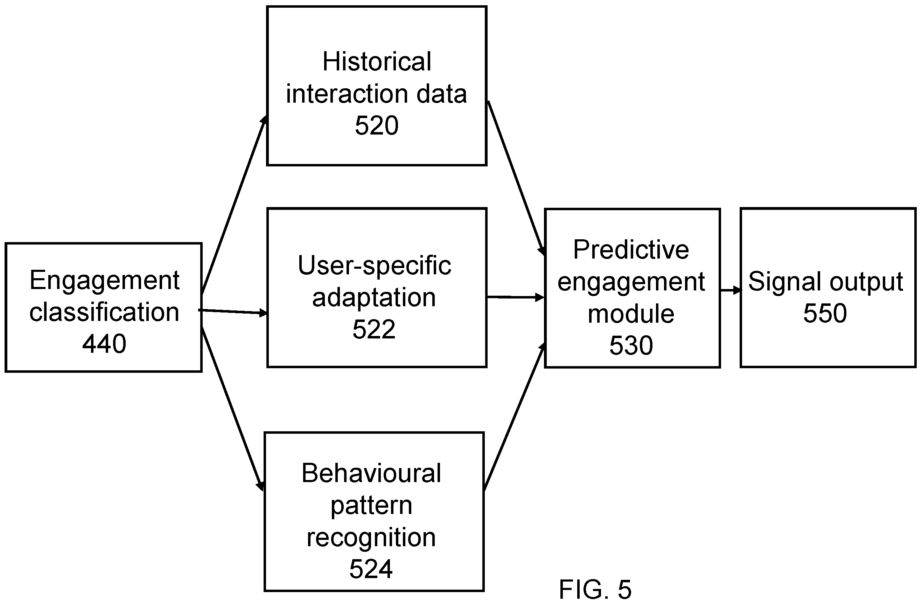

Preferably, the remote server 106 is also configured to select and send one or more re-engagement strategies to the second participant to implement as part of, or subsequently to, sending the alert to the second remote device (104). This is depicted in Fig. 5.

For example, the remote server 106 may further comprise a predictive engagement module 530. This may be configured to predict behavioural outcomes based on classifying behavioural patterns of participants in the call, and analysis in view of historical interaction data. Preferably, the remote server 106 is also configured to select and send one or more behavioural strategies to a participant to implement in order to alter the prediction of the behavioural outcome. For example, the predictive engagement module may be configured to predict a behavioural outcome based on the current behaviour and communication of the participants in the call. However, the remote server may also be able to identify behavioural descriptors which, if altered, are likely to influence the overall behavioural prediction, metrics, and outcome. This may be advantageous to identify and address miscommunications and misunderstandings in real-time during an interaction.

Optionally, the remote server 106 may also send an alert to the first remote device 102 associated with the first participant in the event that the aggregate engagement metric breaches a pre-determined threshold. This may be advantageous to reengage the first participant. In some examples, the alert sent to the first participant, via their associated remote device, may require user input, for example to acknowledge that the alert has been received by the first participant. This may assist in reengaging the first participant in the communication.

The skilled person will understand that the method described above is configured to be performed in real-time to the stream of video and audio data being received. This allows real-time insights to be derived whilst the human interaction (i.e. between the first participant and the second participant) is ongoing. As such, the method is continually repeated as further video and audio data is obtained from the real-time streams.

Whilst the above example is primarily discussed in relation to determining an engagement or disengagement metric, the skilled person will understand that other emotion metrics may also be used, in addition or in substitution.

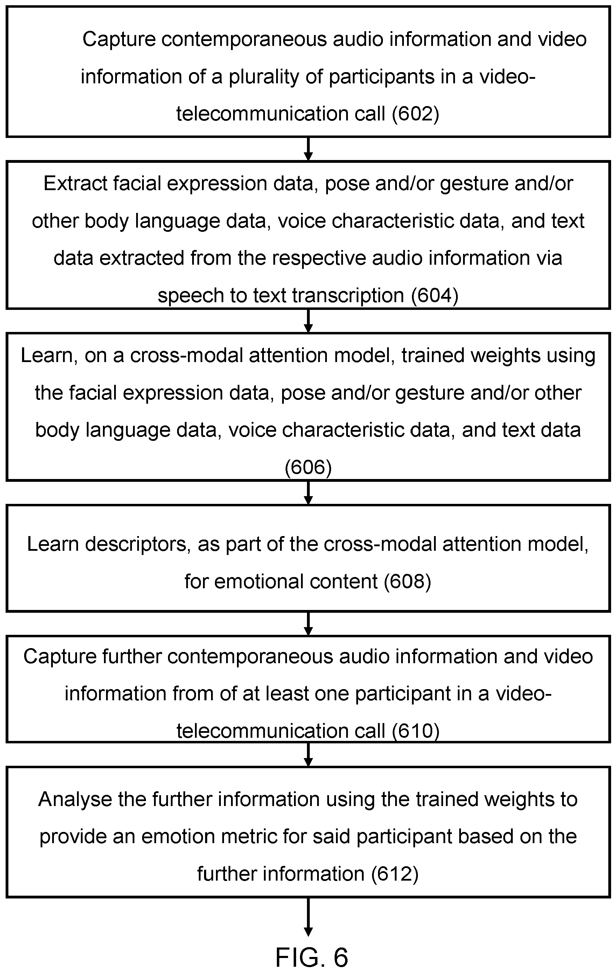

Fig. 6 discloses a method for machine-trained analysis of a video-telecommunication call. The method may be configured to be performed by a processing unit, such as that of the remote server 106. The method comprises obtaining by the remote server contemporaneous audio information and video information from participants in a video-telecommunication call (602). Preferably, the method comprises obtaining contemporaneous audio information and video information from participants in a plurality of video-telecommunication calls.

For each participant, the method comprises extracting facial expression data, pose and/or gesture and/or other body language data, voice characteristic data, and text data extracted from the respective audio information via speech to text transcription (604).

The method then comprises learning, on a cross-modal attention model, trained weights (606) using the facial expression data, pose and/or gesture and/or other body language data, voice characteristic data, and text data extracted from the contemporaneous audio information and video information, wherein the trained weights are trained for each of the facial expression data, pose and/or gesture data and/or other body language, voice characteristic data, and text data and are trained simultaneously. This may be advantageous for the model to learn the trained weights based on the interaction of the facial expression data, pose and/or gesture and/or other body language data, voice characteristic data, and text data. The learning therefore facilitates emotional analysis of the audio information and the video information for a participant in the video-telecommunication call.

The method further comprises learning descriptors (608), as part of the cross-modal attention model, for emotional content. This may include image descriptors, voice descriptors, and/or text descriptors. Image descriptors can include descriptions of visual features within a video, a video frame, an image, and so on. Audio descriptors can include voice descriptors, such as but not limited to include timbre, stress, intonation, vocal register, vocal resonance, pitch, loudness, speech rate, language content, pauses, etc.

The method may then train an emotion classifier. More than one emotion classifier can be trained. The emotion classifiers that are trained can be used to identify an emotion type, where the emotion type can include one or more of sadness, stress, happiness, anger, frustration, confusion, disappointment, hesitation, cognitive overload, focusing, engagement, attention, boredom, exploration, confidence, trust, scepticism, doubt, satisfaction, excitement, calmness, curiosity, joy, relaxation, unhappiness, peace, contentment, clarity, mental clarity, distraction, disengagement, inattention, interest, stagnation, distrust, belief, certainty, dissatisfaction, agitation, indifference, etc.

Once trained, upon receiving further contemporaneous audio information and video information of at least one participant in a video-telecommunication call (610), the method may analyse the further audio and video information using the trained weights to provide an emotion metric for said participant (612). The emotion metric is configured to be repeatedly assessed and updated throughout the duration of the call.

Optionally, the method may additionally train a behavioural predictive model. More than one predictive model can be trained. The behavioural predictive models are trained to predict emotions and behaviours of a participant, based on the emotion metrics determined throughout the duration of the call.

The behavioural predictive model also predicts behaviours or triggers that are likely to alter the emotion metrics of a participant. For example, if a participant is showing increasing confusion, the behavioural predictive model may predict, based on historical interactions, that if the speaker slows down and restates the recent verbal content, the participant's confusion metric is likely to reduce. To this end, the method may be configured to output one or more recommended behaviours and/or triggers that are likely to alter the emotion metrics of a participant to achieve a goal or objective.

The skilled person will understand that the applications of the invention described herein are numerous and varied. Merely by way of example, this could include the below:
- *Transcription:*
   Methods of the present invention may be used to analyse emotion metrics of a participant contemporaneously to the verbal content of an interaction. A transcription or record of the interaction may then be output to include identified emotions or emotion metrics. By capturing this information, alongside verbal content, it allows a more accurate written record of the interaction to be captured.

For example, a video stream and audio stream of a participant in a video-telecommunication call may be obtained. A first embedding is generated, using a first embedding model, based on facial expression data extracted from the participant video stream, and a second embedding, using a second embedding model, based on pose and/or gesture and/or other body language data extracted from the participant video stream. A third embedding is generated, using a third embedding model, based on voice characteristic data extracted from the participant audio stream. Furthermore, a fourth embedding is generated, using a fourth embedding model, based on text data extracted from the participant audio stream via speech to text transcription. A weighting is dynamically assigned to each of the embeddings, using a cross-modal attention mechanism; and a combined embedding is generated based on each of the embeddings and their respective weightings.

An emotion metric is then assigned to the participant based on the combined embedding. For example, the emotion metric may include one or more metrics for any of sadness, stress, happiness, anger, frustration, confusion, disappointment, hesitation, cognitive overload, focusing, engagement, attention, boredom, exploration, confidence, trust, scepticism, doubt, satisfaction, excitement, calmness, curiosity, joy, relaxation, unhappiness, peace, contentment, clarity, mental clarity, distraction, disengagement, inattention, interest, stagnation, distrust, belief, certainty, dissatisfaction, agitation, indifference, sarcasm, or any other emotion, mood, or sentiment, etc.

A signal is then output, wherein the signal comprises generating or updating a transcript of the communication to comprise both (i) a text transcription of the verbal communication based on speech to text transcription, and (ii) one or more emotion classifiers based on the one or more emotion metrics, and/or one or more of the determined emotion metrics themselves. Preferably, the transcript is displayed on a remote device for display to at least one other participant in the call.

Purely by way of illustration, the phrase "Are you serious?" can have completely different meanings based on the non-verbal communication cues. For example:
- High pitch, smiling, in combination with "Are you serious?", can indicate pleasant surprise, or excitement.
- Low pitch, questioning intonation / inflection, closed posture, in combination with "Are you serious?" can indicate doubt or scepticism.
- High volume, furrowed brow, downturned mouth, in combination with "Are you serious?" can indicate frustration, irritation, upset.
- Questioning intonation / inflection, open posture, raised brow, in combination with "Are you serious?" can indicate worry or concern.

As such, generating or updating a transcript of the communication to comprise both (i) a text transcription of the verbal communication based on speech to text transcription, and (ii) one or more emotion classifiers based on the one or more emotion metric and/or one or more of the determined emotion metrics provides a more accurate communication context for the record of the communication.

Purely by way of illustration, an example line of a transcript which includes both (i) a text transcription of the verbal communication based on speech to text transcription, and (ii) one or more emotion classifiers based on the one or more emotion metrics for the speaker is shown below:
*Speaker 1 [excited]:* "Are you serious?"

### • Communication support for individuals:

Methods of the present invention may be used to analyse emotion metrics of a participant contemporaneously to the verbal content for individuals, this may be particularly advantageous for those who may be less able to detect non-verbal cues, such as people with autism. A user may be alerted in the event that an emotion metric breaches a threshold. For example, if a sarcasm metric exceeds a threshold, the user may be sent an alert to communicate that the verbal content of the speaker is likely to be sarcastic (and thus, should not be taken literally). This may be advantageous to reduce incidences of miscommunication or misunderstanding.

For example, a video stream and audio stream of a participant in a video-telecommunication call with a user may be obtained. A first embedding is generated, using a first embedding model, based on facial expression data extracted from the participant video stream, and a second embedding, using a second embedding model, based on pose and/or gesture and/or other body language data extracted from the participant video stream. A third embedding is generated, using a third embedding model, based on voice characteristic data extracted from the participant audio stream. Furthermore, a fourth embedding is generated, using a fourth embedding model, based on text data extracted from the participant audio stream via speech to text transcription. A weighting is dynamically assigned to each of the embeddings, using a cross-modal attention mechanism; and a combined embedding is generated based on each of the embeddings and their respective weightings.

An emotion metric is then assigned to the participant based on the combined embedding. For example, the emotion metric may include one or more metrics for any of sadness, stress, happiness, anger, frustration, confusion, disappointment, hesitation, cognitive overload, focusing, engagement, attention, boredom, exploration, confidence, trust, scepticism, doubt, satisfaction, excitement, calmness, curiosity, joy, relaxation, unhappiness, peace, contentment, clarity, mental clarity, distraction, disengagement, inattention, interest, stagnation, distrust, belief, certainty, dissatisfaction, agitation, indifference, sarcasm, or any other emotion, mood, or sentiment, etc.

A signal is then output to the user, based on the one or more emotion metrics. For example, an alert to communicate an emotion metric or emotion classification is output to a remote device of the user in the event that one or more emotion metrics breach a threshold.

### • Healthcare & Telemedicine:

Methods of the present invention may be used to detect patient emotions, including anxiety, distress, and/or pain, engagement, and/or patient understanding during virtual consultations. The methods may also be used to track clinician empathy metrics, or other emotion metrics, during the consultation to suggest and improve communication techniques for the clinician.

For example, a video stream and audio stream of a patient in a video-telecommunication call with a clinician, such as a virtual consultation, may be obtained in real time. A first embedding is generated, using a first embedding model, based on facial expression data extracted from the patient video stream, and a second embedding, using a second embedding model, based on pose and/or gesture and/or other body language data extracted from the patient video stream. A third embedding is generated, using a third embedding model, based on voice characteristic data extracted from the patient audio stream. Furthermore, a fourth embedding is generated, using a fourth embedding model, based on text data extracted from the patient audio stream via speech to text transcription. A weighting is dynamically assigned to each of the embeddings, using a cross-modal attention mechanism; and a combined embedding is generated based on each of the embeddings and their respective weightings.

An emotion metric is then assigned to the patient based on the combined embedding. For example, the emotion metric may include one or more of an anxiety score, distress score, pain score, and/or an engagement score. A signal can then be output to the clinician in the video-telecommunication call, wherein the signal is based on the emotion metric assigned to the patient. Preferably, the emotion metric is displayed on a remote device for display to the clinician.

Preferably, a video stream and audio stream of the clinician in the video-telecommunication call is also obtained. Embeddings are generated based on facial expression data and pose and/or gesture and/or other body language data extracted from the clinician video stream. Similarly, an embedding is generated based on voice characteristic data extracted from the clinician audio stream, and a further embedding is generated based on text data extracted from the clinician audio stream via speech to text transcription. A weighting is dynamically assigned to each of the clinician embeddings, using a cross-modal attention mechanism. A second combined embedding, based on each of the embeddings generated based on the clinician video and audio streams and the respective dynamic weightings.

An emotion metric can then be assigned to the clinician based on the second combined embedding. For example, the emotion metric may comprise an empathy score. The signal output to the clinician may then be further based on the emotion metric assigned to the clinician.

For example, the signal output to the clinician may comprise one or more recommended communication changes based on both the clinician emotion metric(s) and the patient emotion metric(s).

### • Customer service & call centres:

Methods of the present invention may be used to detect customer emotions, engagement, frustration, and complaint escalation probability during video-telecommunication calls.

For example, a video stream and audio stream of a customer in a video-telecommunication call with a customer service representative or otherwise may be obtained in real time. A first embedding is generated, using a first embedding model, based on facial expression data extracted from the customer video stream, and a second embedding, using a second embedding model, based on pose and/or gesture and/or other body language data extracted from the customer video stream. A third embedding is generated, using a third embedding model, based on voice characteristic data extracted from the customer audio stream. Furthermore, a fourth embedding is generated, using a fourth embedding model, based on text data extracted from the customer audio stream via speech to text transcription. A weighting is dynamically assigned to each of the embeddings, using a cross-modal attention mechanism; and a combined embedding is generated based on each of the embeddings and their respective weightings.

An emotion metric is then assigned to the customer based on the combined embedding. For example, the emotion metric may include one or more of a dissatisfaction score, frustration score, and/or an engagement score. A signal can then be output to the customer service representative in the video-telecommunication call, wherein the signal is based on the emotion metric assigned to the customer. The emotion metric may also be used to determine a complaint escalation risk score. The complaint escalation risk score may be generated based on a predictive model. Preferably, the emotion metric and/or complaint escalation risk score is displayed on a remote device for display to the customer service representative.

Preferably, a video stream and audio stream of the customer service representative in the video-telecommunication call is also obtained. Embeddings are generated based on facial expression data and pose and/or gesture and/or other body language data extracted from the customer service representative video stream. Similarly, an embedding is generated based on voice characteristic data extracted from the customer service representative audio stream, and a further embedding is generated based on text data extracted from the clinician audio stream via speech to text transcription. A weighting is dynamically assigned to each of the customer service representative embeddings, using a cross-modal attention mechanism. A second combined embedding, based on each of the embeddings generated based on the customer service representative video and audio streams and the respective dynamic weightings.

An emotion metric can then be assigned to the customer service representative based on the second combined embedding. For example, the emotion metric may comprise but is not limited to an empathy score.

The signal output to the customer service representative may then be further based on the emotion metric assigned to the clinician. For example, the signal output to the customer service representative may comprise one or more recommended communication changes based on both the customer service representative emotion metric(s) and the customer emotion metric(s).

### • Sales & Business:

Methods of the present invention may be used to detect understanding and/or engagement, or other emotion metrics, of participants during virtual meetings. The methods may also be used to provide real-time strategies to improve participant communication in order to improve understand and/or engagement metrics of the other participants in the call.

For example, a video stream and audio stream of a participant in a video-telecommunication call with a sales person may be obtained. A first embedding is generated, using a first embedding model, based on facial expression data extracted from the participant video stream, and a second embedding, using a second embedding model, based on pose and/or gesture and/or other body language data extracted from the participant video stream. A third embedding is generated, using a third embedding model, based on voice characteristic data extracted from the participant audio stream. Furthermore, a fourth embedding is generated, using a fourth embedding model, based on text data extracted from the participant audio stream via speech to text transcription. A weighting is dynamically assigned to each of the embeddings, using a cross-modal attention mechanism; and a combined embedding is generated based on each of the embeddings and their respective weightings.

An emotion metric is then assigned to the participant based on the combined embedding. For example, the emotion metric may include one or more metrics for any of sadness, stress, happiness, anger, frustration, confusion, disappointment, hesitation, cognitive overload, focusing, engagement, attention, boredom, exploration, confidence, trust, scepticism, doubt, satisfaction, excitement, calmness, curiosity, joy, relaxation, unhappiness, peace, contentment, clarity, mental clarity, distraction, disengagement, inattention, interest, stagnation, distrust, belief, certainty, dissatisfaction, agitation, indifference, sarcasm, or any other emotion, mood, or sentiment, etc.

A signal is then output to the sales person via their remote device, based on the one or more emotion metrics, such as an alert to communicate an emotion metric or emotion classification is output to a remote device of the user in the event that one or more emotion metrics breaches a threshold.

Preferably, a video stream and audio stream of the sales person in the video-telecommunication call is also obtained. Embeddings are generated based on facial expression data and pose and/or gesture and/or other body language data extracted from the sales person video stream. Similarly, an embedding is generated based on voice characteristic data extracted from the sales person audio stream, and a further embedding is generated based on text data extracted from the clinician audio stream via speech to text transcription. A weighting is dynamically assigned to each of the sales person embeddings, using a cross-modal attention mechanism. A second combined embedding, based on each of the embeddings generated based on the sales person video and audio streams and the respective dynamic weightings.

An emotion metric can then be assigned to the sales person based on the second combined embedding. For example, the emotion metric may comprise but is not limited to a persuasiveness score.

The signal may further comprise one or more outputting a recommended behavioural change to the sales person, based on the emotion metric assigned to the participant. The recommended behaviour change may be selected based on a target emotion metric for the participant. The recommended behaviour change may be predicted to achieve the target emotion metric based on a predictive model trained on historical communication data.

### • Law Enforcement:

Methods of the present invention may be used to analyse stress and/or deception in interrogations or questioning of suspects or witnesses. The methods may also be used to provide real-time strategies to improve communication in order to improve trust between the interrogator and interrogatee.

For example, a video stream and audio stream of an interrogatee with an interrogator may be obtained. A first embedding is generated, using a first embedding model, based on facial expression data extracted from the interrogatee video stream, and a second embedding, using a second embedding model, based on pose and/or gesture and/or other body language data extracted from the interrogatee video stream. A third embedding is generated, using a third embedding model, based on voice characteristic data extracted from the interrogatee audio stream. Furthermore, a fourth embedding is generated, using a fourth embedding model, based on text data extracted from the interrogatee audio stream via speech to text transcription. A weighting is dynamically assigned to each of the embeddings, using a cross-modal attention mechanism; and a combined embedding is generated based on each of the embeddings and their respective weightings.

An emotion metric is then assigned to the interrogatee based on the combined embedding. For example, the emotion metric may include one or more metrics for any of stress, confusion, hesitation, engagement, attention, confidence, trust, scepticism, doubt, distraction, disengagement, inattention, interest, distrust, certainty, agitation, indifference, sarcasm, or any other emotion, mood, or sentiment, etc.

A signal is then output to the interrogator via their remote device, based on the one or more emotion metrics, such as an alert to communicate an emotion metric or emotion classification is output to a remote device of the user in the event that one or more emotion metrics breaches a threshold.

### • Education and public speaking:

Methods of the present invention may be used to analyse audience / student engagement, attention shifts, and/or understanding during delivery of educational content. The methods may also be used to provide real-time strategies to the speaker to improve engagement, attention, and/or understanding, such as but not limited to real-time posture, tone, and pacing adaptation.

For example, a video stream and audio stream of a student or attendee may be obtained. A first embedding is generated, using a first embedding model, based on facial expression data extracted from the student or attendee video stream, and a second embedding, using a second embedding model, based on pose and/or gesture and/or other body language data extracted from the student or attendee video stream. A third embedding is generated, using a third embedding model, based on voice characteristic data extracted from the student or attendee audio stream. Furthermore, a fourth embedding is generated, using a fourth embedding model, based on text data extracted from the student or attendee audio stream via speech to text transcription. A weighting is dynamically assigned to each of the embeddings, using a cross-modal attention mechanism; and a combined embedding is generated based on each of the embeddings and their respective weightings.

An emotion metric is then assigned to the student or attendee based on the combined embedding. For example, the emotion metric may include one or more metrics for any of confusion, cognitive overload, focusing, engagement, attention, boredom, confidence, doubt, distraction, disengagement, inattention, interest, stagnation, distrust, belief, certainty, dissatisfaction, agitation, or any other emotion, mood, or sentiment, etc.

A signal is then output to the presenter via their remote device, based on the one or more emotion metrics, such as an alert to communicate an emotion metric or emotion classification is output to a remote device of the user in the event that one or more emotion metrics breaches a threshold.

The skilled person will understand that emotion metrics may be determined for a plurality of students or attendees. In such examples, one or more average emotion metrics may be calculated for the plurality of students or attendees. As such, the signal output to the presenter may be based on the one or more average emotion metrics.

The signal may further comprise one or more outputting a recommended behavioural change to the presenter, based on one or more emotion metrics. The recommended behaviour change may be selected based on a target emotion metric for the students or attendees. The recommended behaviour change may be predicted to achieve the target emotion metric based on a predictive model trained on historical communication data.

The examples discussed above are primarily disclosed as being used for analysis of a video-telecommunication call, wherein the video and audio streams of the first participant are obtained from the video-telecommunication call. However, the skilled person will understand that the method may also be applied to other human interactions for which a video and audio stream is obtained, including for example in-person interactions for which a video and audio stream is obtained by a remote device.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In the context of the present disclosure other examples and variations of the apparatus and methods described herein will be apparent to a person of skill in the art.

## Claims

1. A computer implemented method for analysis of a video-telecommunication call, the method comprising:
obtaining a first video stream of a first participant in a video-telecommunication call;
generating a first embedding, using a first embedding model, based on facial expression data extracted from the first video stream;
generating a second embedding, using a second embedding model, based on pose and/or gesture data extracted from the first video stream;
obtaining a first audio stream of the first participant in the video- telecommunication call, contemporaneous to the first video stream;
generating a third embedding, using a third embedding model, based on voice characteristic data extracted from the first audio stream;
generating a fourth embedding, using a fourth embedding model, based on text data extracted from the first audio stream via speech to text transcription;
dynamically assigning a weighting to each of the first to fourth embeddings, using a cross-modal attention mechanism; and
generating a combined embedding, based on each of the first to fourth embeddings and the respective dynamic weightings;
assigning an emotion metric to the first participant based on the combined embedding;
outputting a signal to a second participant in the video-telecommunication call, wherein the signal is based on the emotion metric assigned to the first participant.

2. The method of any preceding claim wherein the output signal comprises the emotion metric assigned to the first participant.

3. The method of any preceding claim wherein the emotion metric may be a disengagement metric.

4. The method of any preceding claim wherein the assigned emotion metric is updated during the video-telecommunication call based on the obtained real-time video and audio streams.

5. The method of any preceding claim wherein outputting the signal comprises outputting or updating a transcript of the video-telecommunication call, wherein the output or updated transcript comprises the emotion metric assigned to the first participant.

6. The method of any preceding claim further comprising:
predicting an outcome of the video-telecommunication call, using a predictive model, based on the combined embedding and the assigned emotion metric;
wherein outputting the signal to the second participant is based on the predicted outcome; and
optionally, wherein predicting the outcome of the video-telecommunication call using the predictive model is based on historical behavioral patterns and the assigned emotion metric.

7. The method of any preceding claim, further comprising:
obtaining a second video stream of the second participant in the video-telecommunication call;
generating a fifth embedding, using the first embedding model, based on facial expression data extracted from the second video stream;
generating a sixth embedding, using the second embedding model, based on pose and/or gesture data extracted from the second video stream;
obtaining a second audio stream of the second participant in the video-telecommunication call, contemporaneous to the first and second video streams;
generating a seventh embedding, using the third embedding model, based on voice characteristic data extracted from the second audio stream;
generating an eighth embedding, using the fourth embedding model, based on text data extracted from the second audio stream via speech to text transcription;
dynamically assigning a weighting to each of the fifth to eighth embeddings, using a cross-modal attention mechanism; and
generating a second combined embedding, based on each of the fifth to eighth embeddings and the respective dynamic weightings; and
assigning an emotion metric to the second participant based on the second combined embedding;
wherein outputting the signal to the second participant is further based on the emotion metric assigned to the second participant.

8. The method of any preceding claim wherein outputting the signal comprises outputting a recommended behavioural change to the second participant, based on the emotion metric assigned to the first participant

9. The method of any preceding claim further comprising:
generating, in real time, an aggregate probability of disengagement of the first participant based on the combined embedding for said first participant; and
sending a signal to generate an alert in the event that the aggregate probability of disengagement exceeds a threshold.

10. A computer-implemented method for machine-trained analysis of a video-telecommunication call comprising:
capturing, into a computing device, contemporaneous audio information and video information from a plurality of participants in a video-telecommunication call;
for each participant, extracting facial expression data, pose and/or gesture data, voice characteristic data, and text data extracted from the respective audio information via speech to text transcription;
learning, on a cross-modal attention model, trained weights using the facial expression data, pose and/or gesture data, voice characteristic data, and text data extracted from the contemporaneous audio information and video information, wherein the trained weights are trained for each of the facial expression data, pose and/or gesture data, voice characteristic data, and text data and are trained simultaneously, and wherein the learning facilitates emotional analysis of the audio information and the video information for a participant in the video-telecommunication call;
learning descriptors, as part of the cross-modal attention model, for emotional content; and
capturing, into a second computing device, further contemporaneous audio information and video information of at least one participant in a video-telecommunication call, and analysing the further information using the trained weights to provide an emotion metric for said participant based on the further information.

11. The method of claim 10, further comprising:
capturing, into a computing device, contemporaneous audio information and video information of at least a first participant in a video-telecommunication call and a second participant in the same video-telecommunication call;
for each participant, extracting facial expression data, pose and/or gesture data, voice characteristic data, and text data extracted from the respective audio information via speech to text transcription;
learning, on a cross-modal attention model, trained weights using the facial expression data, pose and/or gesture data, voice characteristic data, and text data extracted from the contemporaneous audio information and video information for the first and second participants, wherein the learning facilitates analysis of communication between the first and second participants in the video-telecommunication call;
learning descriptors, as part of the cross-modal attention model, for communicative content; and
capturing, into a second computing device, further contemporaneous audio information and video information of at least a first and second participant in a video-telecommunication call, and analysing the further information using the trained weights to provide a descriptor of the communicative content for the video-telecommunication call based on the further information;
optionally further comprising:
learning descriptors for each of facial expression data, pose and/or gesture data, voice characteristic data, and text data; and
based on the descriptor of the communicative content, outputting at least one descriptor relating facial expression data, pose and/or gesture data, voice characteristic data, and text data, wherein the output descriptor is correlated with a different communicative content descriptor to the communicative content descriptor provided by the analysis such that presence of the facial expression data, pose and/or gesture data, voice characteristic data, and text data associated with said output descriptor in further contemporaneous audio information and video information of at least a first and second participant in a video-telecommunication call is predicted to change the communicative content descriptor for the video-telecommunication call.

12. A computer-implemented method for detecting conversational disengagement in a video-telecommunication call, the method comprising:
obtaining a first video stream of a first participant in a video-telecommunication call;
capturing facial expression data and pose and/or gesture data extracted from the first video stream;
obtaining a first audio stream of the first participant in the video- telecommunication call, contemporaneous to the first video stream;
capturing voice characteristic data extracted from the first audio stream;
capturing text data extracted from the first audio stream via speech to text transcription;
dynamically assigning a weighting to each of the captured facial expression data, pose and/or gesture data, voice characteristic data, and text data using a cross-modal attention mechanism; and
determining an aggregate engagement metric for the first participant based on each of the captured facial expression data, pose and/or gesture data, voice characteristic data, and text data and the respective dynamic weightings; and
sending an alert a second participant in the video-telecommunication call in the event that the aggregate engagement metric breaches a pre-determined threshold.

13. The method of claim 12 further comprising outputting a recommended counterstrategy to re-engage the participant.

14. The method of any of claims 12 to 13 further comprising sending an alert to the first participant in the video-telecommunication call in the event that the aggregate engagement metric breaches a pre-determined threshold.

15. A computer program product comprising instructions configured to program a programmable processor to perform the method of any preceding claim.
